# EUROPEAN PATENT SPECIFICATION

(11) **EP 4 293 771 B1**
(45) Date of publication and mention of the grant of the patent: **04.02.2026**
(21) Application number: 22896150.4
(22) Date of filing: 18.11.2022
(51) Int. Cl.: H01M 10/04, H01M 10/42, H01M 10/0525, H01M 50/533, H01M 50/538, H01M 10/0587

(54) **ELECTRODE ASSEMBLY AND SECONDARY BATTERY COMPRISING SAME**
ELEKTRODENANORDNUNG UND SEKUNDÄRBATTERIE DAMIT
ENSEMBLE ÉLECTRODE ET BATTERIE SECONDAIRE LE COMPRENANT

(30) Priority: 19.11.2021 KR 20210160355
(43) Date of publication of application: 20.12.2023
(73) Proprietor: LG Energy Solution, Ltd., Seoul 07335 (KR)
(72) Inventor: PARK, Inbok, Daejeon 34122 (KR); YANG, Donghyeong, Daejeon 34122 (KR); WOO, Jae young, Daejeon 34122 (KR)
(74) Representative: Goddar, Heinz J.
(86) International application number: PCT/KR2022/018350
(87) International publication number: WO 2023/090953

(56) References cited:
- EP-A1- 2 846 379
- EP-A2- 2 341 575
- JP-A- 2006 004 729
- JP-A- 2007 227 137
- JP-A- 2007 227 137
- JP-A- H0 992 335
- KR-A- 20050 121 904
- KR-A- 20200 041 625

## Description

### [Technical Field]

The present specification relates to an electrode assembly and a secondary battery including the same.

### [Background Art]

Recently, there has been an increasing need for batteries capable of implementing high capacities and high outputs. According to the environmental-friendly policy, electric vehicle markets have been rapidly grown, and thus high performance has been required for the batteries.

JP2007227137A discloses an electrode assembly according to the preamble of the appended claim 1.

In the case of a cylindrical secondary battery, thicknesses of current collectors or separators and sizes or shapes of cans and top caps are changed and optimized to place a large number of electrodes into a limited space. However, this optimization reaches a limit level within the limited size.

In the case of the cylindrical secondary battery in the related art, positive and negative electrodes each have one or two tabs used as conductive paths. In this case, the improvement on resistance is limited because there is a problem in that resistance increases as a physical distance from the tab increases.

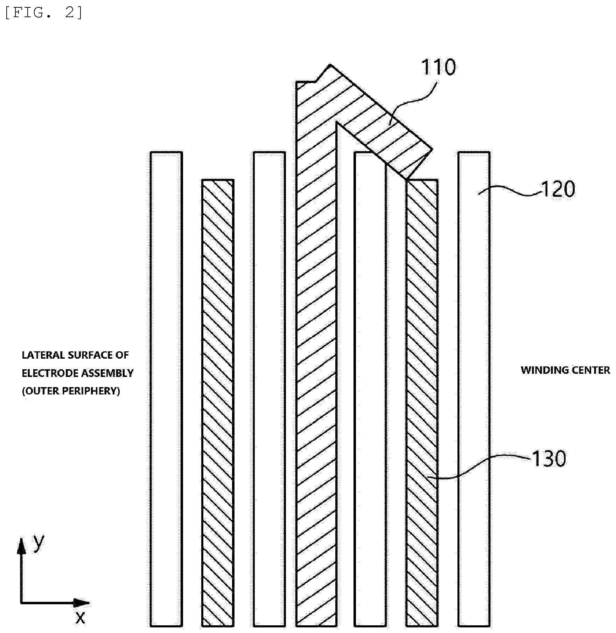

To solve the problem, there is a method that forms electrode active material non-coated regions (non-coated portions) on upper and lower portions of an electrode current collector, superimposes the electrode active material non-coated regions (non-coated portions) after a notching process, and use the electrode active material non-coated regions (non-coated portions) as tabs. In this case, as illustrated in FIG. 2, there is a problem in that a part of a positive electrode non-coated portion 110 is folded inward and comes into contact with a negative electrode 130, which causes a short circuit. Accordingly, there is a need to solve the problem.

### [Detailed Description of the Invention]

### [Technical Problem]

An object of the present invention is to change a method of folding a non-coated portion of an electrode of an electrode assembly, thereby removing a likelihood of a short circuit caused by the method of folding the non-coated portion of the electrode in the related art.

### [Technical Solution]

An embodiment of the present specification provides an electrode assembly including a first electrode, a separator, and a second electrode, in which the first electrode includes: a current collector; and an electrode active material layer provided on the current collector, in which an edge portion of the current collector provided at one end of a winding axis of the electrode assembly includes a non-coated portion on which no electrode active material layer is provided, and in which a non-coated portion of the first electrode is bent one or more times in a direction from a winding center of an electrode assembly toward an outer periphery of the electrode assembly.

In addition, according to the invention, the non-coated portion includes a plurality of segmental pieces, and each of the plurality of segmental pieces may be bent one or more times in the direction from the winding center of the electrode assembly toward the outer periphery of the electrode assembly.

In addition, according to the invention, a segmental piece of the non-coated portion of the plurality of segmental pieces on the outer periphery of the electrode assembly is bent twice so as to face a lateral surface of the electrode assembly.

In addition, in the embodiment of the present specification, at least a part of a segmental piece of the plurality of segmental pieces of the non-coated portion may adjoin at least a part of the bent portion of an adjacent segmental piece of the plurality of segmental piece in a radial direction.

In addition, in the embodiment of the present specification, a length from an initially bent portion of the non-coated portion of the first electrode to an end of the non-coated portion of the first electrode may be 1 mm or more.

In addition, in the embodiment of the present specification, the segmental piece on the outer periphery of the electrode assembly may adjoin the lateral surface of the electrode assembly by 1% or more and 30% or less of an overall height of the electrode assembly.

In addition, in the embodiment of the present specification, the first electrode may be a positive electrode, the second electrode may be a negative electrode, and the first electrode may be exposed to the outside with respect to an upper surface of the electrode assembly.

In addition, in the embodiment of the present specification, the first electrode may further include an insulation tape provided on a surface opposite to a surface facing the lateral surface of the electrode assembly.

In addition, the embodiment of the present specification provides a secondary battery including the electrode assembly, a battery can configured to accommodate the electrode assembly, and a cap assembly coupled to an upper portion of the battery can.

### [Advantageous Effects]

According to the electrode assembly according to the embodiment of the present specification, the non-coated portion of the electrode is bent one or more times in the direction from the winding center of the electrode assembly toward the outer periphery of the electrode assembly, which makes it possible to prevent an internal short circuit caused by contact between the positive electrode non-coated portion and the negative electrode.

### [Brief Description of Drawings]

FIG. 1 is a schematic view illustrating a direction in which a positive electrode non-coated portion in the related art is bent from an outer periphery of an electrode assembly toward a winding center of the electrode assembly.
FIG. 2 is a schematic view illustrating that a short circuit occurs when the positive electrode non-coated portion is bent inward by an upward load and comes into contact with a negative electrode in case that the positive electrode non-coated portion is bent from the outer periphery of the electrode assembly toward the winding center of the electrode assembly.
FIG. 3 is a schematic view illustrating a bending shape and a bending direction of a positive electrode non-coated portion of an electrode assembly according to an embodiment of the present specification.
FIG. 4 is a schematically illustrating that a non-coated portion of a first electrode includes a plurality of segmental pieces.

### [Explanation of Reference Numerals and Symbols]

110: First electrode, positive electrode
111: Current collector
112: Electrode active material layer
113: Non-coated portion, segmental piece
114: Insulating coating layer
115: First electrode provided on outermost periphery of electrode assembly
120: Separator
130: Second electrode, negative electrode
140: Insulation tape
a: Width of area in which at least a part of bent portion of non-coated portion and at least a part of bent portion of adjacent non-coated portion adjoin each other
b: Width of first electrode
P: Direction from winding center of electrode assembly toward outer periphery of electrode assembly

### [Best Mode]

Hereinafter, the present specification will be described in more detail.

Hereinafter, exemplary embodiments of the present invention will be described in detail with reference to the accompanying drawings.

In addition, to help understand the present invention, the accompanying drawings are not illustrated based on actual scales, but some constituent elements may be exaggerated in dimension. In addition, the constituent elements in different embodiments may be assigned with the same reference numerals.

In the present specification, the term "on" not only means that a layer is positioned on one layer while being in physical contact with the layer but also means that a layer is positioned above one layer. That is, still another layer may be present between one layer and another layer positioned on one layer.

In the specification, unless explicitly described to the contrary, the word "comprise" or "include" and variations, such as "comprises", "comprising", "includes" or "including", will be understood to imply the inclusion of stated constituent elements, not the exclusion of any other constituent elements.

An electrode assembly 10 according to the present specification is a jelly-roll type electrode assembly having a structure in which first and second electrodes, which each have a sheet shape, and a separator, which is interposed between the first and second electrodes, are wound in one direction.

In the embodiment of the present specification, the electrode assembly 10 is an electrode assembly made by winding a stack of a first electrode 110, a separator 120, and a second electrode 130. The first electrode 110 includes a current collector 111 and an electrode active material layer 112 provided on the current collector 111. An edge portion of the current collector 111 provided at one end of a winding axis of the electrode assembly 10 includes a non-coated portion 113 on which the electrode active material layer 112 is not provided. The non-coated portion 113 of the first electrode is bent one or more times in a direction P from a winding center of the electrode assembly 10 toward an outer periphery of the electrode assembly 10.

In the embodiment of the present specification, the non-coated portion 113 of the first electrode is bent one or more times at an angle of 30° to 90° in the direction P from the winding center of the electrode assembly toward the outer periphery of the electrode assembly.

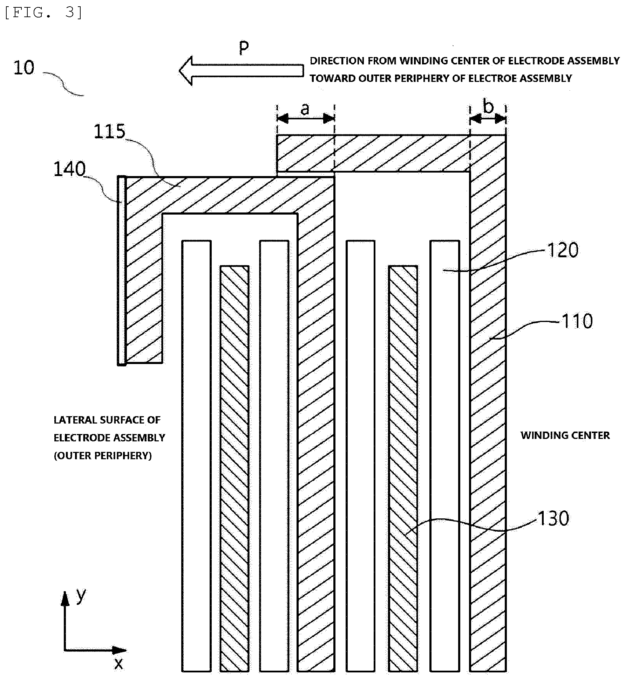

FIG. 3 illustrates the direction P from the winding center of the electrode assembly toward the outer periphery of the electrode assembly.

A region of the current collector on which no electrode active material layer is formed is a non-coated portion (not illustrated in the drawings), and the non-coated portion means a region in which a positive electrode current collector or a negative electrode current collector is exposed.

In this case, a separate electrode tab is not coupled to the non-coated portion of the first electrode. At least a part of the non-coated portion may be used as an electrode tab as it is.

In the embodiment of the present specification, the first electrode 110 may be a positive electrode, and the second electrode 130 may be a negative electrode. The first electrode 110 may be exposed to the outside with respect to an upper surface of the electrode assembly.

In the embodiment of the present specification, the first and second electrodes 110 and 130 each include the current collector 111, and the electrode active material layer 112 provided on the current collector 111. The electrode active material layer 112 includes an electrode active material.

For example, the positive electrode active material may include lithium cobalt oxide having high working voltage and excellent capacity characteristics, lithium nickel oxide having high reversible capacity and used to easily implement a high-capacity battery, lithium nickel cobalt oxide made by substituting a part of nickel with cobalt, lithium nickel cobalt metal oxide made by substituting a part of nickel with manganese, cobalt, or aluminum, lithium manganese-based oxide having excellent thermal stability and made with low costs, and lithium iron phosphate having excellent stability.

For example, the negative electrode active material may be crystalline carbon, amorphous carbon, carbon composite body, carbon material such as carbon fiber, silicon, lithium metal, lithium alloy, or the like.

The separator 120 is positioned between the positive and negative electrodes while having predetermined mechanical strength, and the separator 120 is made of a porous material to facilitate the movement of ions between the electrodes. For example, the separator 120 may be made of any one material selected from a group consisting of polyethylene (PE), polystyrene (PS), polypropylene (PP), and a copolymer of polyethylene (PE) and polypropylene (PP).

In the embodiment of the present specification, a method of bending the non-coated portion of the first electrode of the electrode assembly is performed by applying pressure by using a bending device.

Specifically, the non-coated portion of the first electrode is bent by being wound toward the outer periphery of the electrode assembly in the winding direction of the electrode assembly by using the bending device. The non-coated portion of the first electrode, which is at least provided on the outermost periphery of the electrode assembly, may be bent by inertia by using the bending device.

More specifically, the non-coated portion of the first electrode may be bent once by using the bending device, and then the non-coated portion of the first electrode at least provided on the outermost periphery of the electrode assembly may be additionally bent by a taping process using an insulation tape. Alternatively, the electrode assembly may be coupled to a cylindrical hollow holder, which has an opened bottom and a closed ceiling, to induce additional bending, and then the non-coated portion of the first electrode may be formed by the taping process using the insulation tape.

FIG. 3 is a view illustrating a bending shape and a bending direction of the positive electrode non-coated portion of the electrode assembly. The positive electrode 110 illustrated in FIG. 3 may include all an electrode active material layer (not illustrated), an insulating coating layer (not illustrated), and a non-coated portion (not illustrated).

As illustrated in FIG. 3, the electrode assembly according to the embodiment of the present specification includes the positive electrode 110, the separator 120, and the negative electrode 130. The non-coated portion of the positive electrode 110 has a shape bent in the direction from the winding center of the electrode assembly toward the outer periphery of the electrode assembly. In particular, the non-coated portion of the positive electrode provided on the outermost periphery of the electrode assembly is bent twice so as to faces a lateral surface of the electrode assembly.

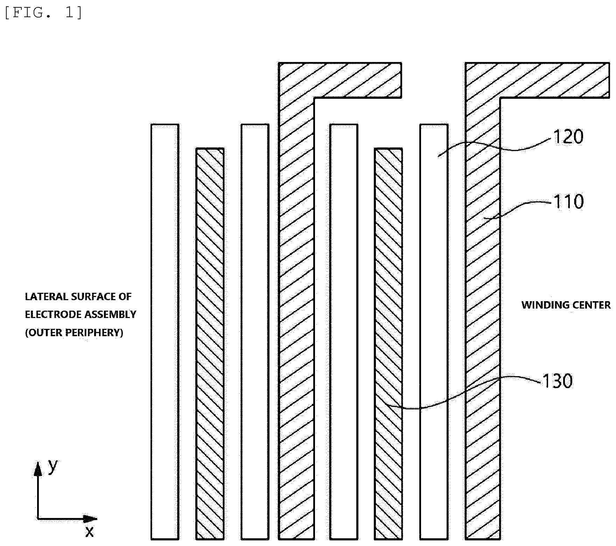

The non-coated portions are provided on upper and lower portions of the electrode current collector, superimposed after the notching process, and then used as tabs. As illustrated in FIG. 1 in the present specification, a bending direction of a positive electrode non-coated portion is a direction toward a winding center of an electrode assembly in the related art. In this case, as indicated by the dotted circle illustrated in FIG. 2 in the present specification, there is a problem in that a part of the positive electrode non-coated portion is folded inward and comes into contact with a negative electrode, which causes a short circuit.

In the present invention, as illustrated in FIG. 3, the non-coated portion of the positive electrode has a shape bent in the direction from the winding center of the electrode assembly toward the outer periphery of the electrode assembly, which makes it possible to prevent an internal short circuit caused by contact between the positive electrode non-coated portion and the negative electrode.

In the embodiment of the present specification, the non-coated portion of the first electrode includes a plurality of segmental pieces 113. The plurality of segmental pieces 113 may be bent one or more times in the direction P from the winding center of the electrode assembly toward the outer periphery of the electrode assembly.

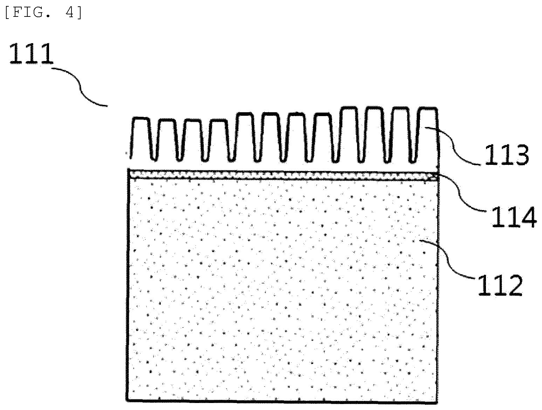

In the embodiment of the present specification, the non-coated portion of the first electrode may include the plurality of notched segmental pieces 113. That is, the non-coated portion of the first electrode may be provided in the form of a serrated wheel. FIG. 4 is a view schematically illustrating that the non-coated portion 113 of the first electrode includes the plurality of segmental pieces, and the non-coated portion 113, which does not have the electrode active material layer 112, is segmented and provided in the form of a serrated wheel. FIG. 4 is a view illustrating that the segmental pieces are spaced apart from one another. However, the shape, the length, and the spacing distance of the segmental piece are not limited thereto.

In the embodiment of the present specification, the plurality of segmental pieces 113 may have the same height, width, or spacing distance or different heights, widths, or spacing distances.

In the embodiment of the present specification, a length of each of the plurality of segmental pieces 113 may be 4 mm to 20 mm.

The length of the segmental piece 113 may mean a vertical distance from a boundary between the non-coated portion 113 and the electrode active material layer 112 of the current collector 111 to a distal end of the non-coated portion.

In case that the range of length is satisfied, the length of the segmental piece is short, which makes it possible to prevent the segmental piece from entering the electrode assembly and causing a short circuit when the segmental piece is bent.

In the embodiment of the present specification, the length of each of the plurality of segmental pieces 113 may be 4 mm to 15 mm.

In the embodiment of the present specification, the length of each of the plurality of segmental pieces 113 may be 6 mm to 10 mm.

In the embodiment of the present specification, a spacing distance between any one segmental piece 113 and another adjacent segmental piece, among the plurality of segmental pieces, may be 1 mm to 150 mm.

In case that the range of spacing distance is satisfied, resistance of the electrode may be appropriately maintained, gas is easily discharged at the time of injecting an electrolyte, and gas trapping may be less generated when the battery is used after battery activation.

In the embodiment of the present specification, the spacing distance between any one segmental piece 113 and another adjacent segmental piece, among the plurality of segmental pieces, may be 1 mm to 48 mm.

In the embodiment of the present specification, the spacing distance between any one segmental piece 113 and another adjacent segmental piece, among the plurality of segmental pieces, may be 5 mm to 36 mm.

In the embodiment of the present specification, a width of the segmental piece 113 may be 2 mm to 30 mm.

In case that the above-mentioned range is satisfied, welding and bending may be easily performed.

According to the invention,a segmental piece of the plurality of segmental pieces of the non-coated portion (113)located at least on the outermost periphery of the electrode assembly is bent twice so as to face a lateral surface of the electrode assembly.

In the embodiment of the present specification, as illustrated in FIG. 3, the segmental piece of the non-coated portion of the first electrode 115 at least provided on the outermost periphery of the electrode assembly is bent twice so as to face the lateral surface of the electrode assembly 10 and thus have a ' 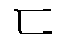 ' or 'U' shape.

Because the non-coated portion of the first electrode 115 at least provided on the outermost periphery of the electrode assembly is bent twice, it is possible to prevent a short circuit caused by contact between the positive electrode non-coated portion and the negative electrode and improve structural stability when the first electrode 110 is used as the positive electrode.

In the embodiment of the present specification, at least a part of the bent portion of the non-coated portion may adjoin at least a part of the bent portion of the adjacent non-coated portion.

The term "adjacent" may mean a positional relationship between one non-coated portion and another non-coated portion close to one non-coated portion and does not mean only physical contact. Specifically, the term "adjacent" may mean a positional relationship between one non-coated portion and another non-coated portion closest to one non-coated portion.

In case that at least a part of the bent portion of the non-coated portion adjoins at least a part of the bent portion of the adjacent non-coated portion, an internal short circuit may be prevented because the non-coated portion does not come into contact with the negative electrode.

In the embodiment of the present specification, a width (a) of an area in which at least a part of the bent portion of the non-coated portion and at least a part of the bent portion of the adjacent non-coated portion adjoin each other may be larger than a width (b) of the first electrode. In this case, it is possible to further improve structural stability

In the embodiment of the present specification, a length from an initially bent portion of the non-coated portion to the end of the non-coated portion may be 1 mm or more. In case that the length is satisfied, it is possible to prevent a short circuit caused by contact between the electrodes.

In the embodiment of the present specification, the length from the initially bent portion of the non-coated portion to the end of the non-coated portion may be 2 mm or more.

In the embodiment of the present specification, the length from the initially bent portion of the non-coated portion to the end of the non-coated portion may be 4 mm or more.

In the embodiment of the present specification, the length from the initially bent portion of the non-coated portion to the end of the non-coated portion may be 5 mm or more.

In the embodiment of the present specification, the length from the initially bent portion of the non-coated portion to the end of the non-coated portion may be 10 mm or more.

In the embodiment of the present specification, the non-coated portion, which is bent twice, may adjoin the lateral surface of the electrode assembly by 1% or more of an overall height of the electrode assembly.

In the present specification, the overall height of the electrode assembly means a maximum length in a winding axis direction of the electrode assembly and means a length in a y direction in FIG. 3.

In the embodiment of the present specification, the non-coated portion, which is bent twice, may adjoin the lateral surface of the electrode assembly by 2% or more of the overall height of the electrode assembly.

In the embodiment of the present specification, the non-coated portion, which is bent twice, may adjoin the lateral surface of the electrode assembly by 3% or more of the overall height of the electrode assembly.

In the embodiment of the present specification, the non-coated portion, which is bent twice, may adjoin the lateral surface of the electrode assembly by 4% or more of the overall height of the electrode assembly.

In the embodiment of the present specification, the non-coated portion, which is bent twice, may adjoin the lateral surface of the electrode assembly by 5% or more of the overall height of the electrode assembly.

In the embodiment of the present specification, the non-coated portion, which is bent twice, may adjoin the lateral surface of the electrode assembly by 30% or less of the overall height of the electrode assembly.

In the embodiment of the present specification, the non-coated portion, which is bent twice, may adjoin the lateral surface of the electrode assembly by 25% or less of the overall height of the electrode assembly.

In the embodiment of the present specification, the non-coated portion, which is bent twice, may adjoin the lateral surface of the electrode assembly by 20% or less of the overall height of the electrode assembly.

In the embodiment of the present specification, the non-coated portion, which is bent twice, may adjoin the lateral surface of the electrode assembly by 15% or less of the overall height of the electrode assembly.

In the embodiment of the present specification, the non-coated portion, which is bent twice, may adjoin the lateral surface of the electrode assembly by 10% or less of the overall height of the electrode assembly.

In the embodiment of the present specification, the non-coated portion bent twice, a height of a portion of the non-coated portion, which faces the lateral surface of the electrode assembly, may be 1% or more and 30% or less of the overall height of the electrode assembly.

In the embodiment of the present specification, the first electrode 110 may further include insulation tape 140 provided on a surface opposite to the surface facing the lateral surface of the electrode assembly. The insulation tape 140 may prevent the non-coated portion of the first electrode, which is bent twice and exposed to the lateral surface of the electrode assembly, from coming into contact with the battery can, thereby preventing a short circuit. FIG. 3 illustrates a position at which the insulation tape 140 is provided on the non-coated portion bent twice. However, the position at which the insulation tape is provided is not limited thereto.

In the embodiment of the present specification, the insulation tape 140 may be provided to surround a region from a portion where the non-coated portion of the first electrode is bent twice to an end of the non-coated portion.

In the embodiment of the present specification, the insulation tape 140 may be provided to surround both the portion where the non-coated portion of the first electrode is bent twice and the adjacent separator.

Any material of the insulation tape 140, which is an insulation material publicly known in the art, may be used without limitation. For example, the material of the insulation tape 140 may include polyamide, polyacetal, polycarbonate, polyethylene terephthalate, or rubber.

In the embodiment of the present specification, as illustrated in FIG. 4, the first electrode 110 and the second electrode 130 may further include an insulating coating layer 114 configured to cover a boundary between the electrode active material layer 112 and the non-coated portion 113. The insulating coating layer 114 contains polymer resin with insulation and may further selectively include an inorganic filler.

The insulating coating layer 114 serves to prevent an end of the electrode active material layer 112 from coming into contact with an active material layer having an opposite polarity and facing the electrode active material layer 112 through the separator. The insulating coating layer 114 serves to structurally support the bent portion of the segmental piece 113.

In the embodiment of the present specification, the second electrode 120 includes the current collector, and the electrode active material layer provided on the current collector. An edge portion of the current collector provided at the other end of the winding axis of the electrode assembly may include the non-coated portion on which no electrode active material layer is provided.

In the embodiment of the present specification, the second electrode 120 may be a negative electrode.

The electrode active material, which is used for the electrode active material layer of the second electrode, is identical to the negative electrode active material.

Another embodiment of the present specification provides a secondary battery including the electrode assembly, a battery can configured to accommodate the electrode assembly, and a cap assembly coupled to an upper portion of the battery can.

The electrode assembly, which is provided in the form of a wound jelly roll, may be inserted into the battery can.

The battery can may accommodate the electrode assembly therein and be made of stainless steel, aluminum (Al), or the like. However, the present invention is not necessarily limited thereto. The material of the battery can may be selected from materials that may have low reactivity, protect the battery can from external impact, allow the battery can to accommodate the electrode assembly and the electrolyte therein.

The battery can may have a cylindrical shape. A diameter of a circle of each of the two opposite ends of the battery can may be 30 mm to 55 mm, and a height of the battery can may be 60 mm to 120 mm. For example, a value of circular diameter x height of the cylindrical battery can may be 40 mm x 60 mm, 40 mm x 80 mm, 40 mm x 90 mm, or 40 mm x 120 mm.

The cap assembly may include a circuit board, an insulating gasket, and the like and seal the battery can by being coupled to an upper portion of the battery can.

In the embodiment of the present specification, the secondary battery may further include an upper current collecting plate provided on the electrode assembly. In this case, the upper current collecting plate may be coupled to the electrode assembly by welding.

In the embodiment of the present specification, the current collecting plate of the secondary battery may be coupled to the cap assembly.

In the embodiment of the present specification, the secondary battery may further include a lower current collecting plate provided on a lower portion of the electrode assembly. In this case, the lower current collecting plate may be electrically coupled to the battery can. That is, the lower current collecting plate may be provided between the electrode assembly and the battery can.

In the embodiment of the present specification, the lower current collecting plate may be electrically coupled to the non-coated portion of the second electrode of the electrode assembly.

Another embodiment of the disclosure provides a battery module and a battery pack that include the secondary battery according to the above-mentioned embodiment.

## Claims

1. An electrode assembly made by winding a stack comprising: a first electrode (110), a separator (120), and a second electrode (130),
wherein the first electrode (110) comprises:
a current collector (111); and
an electrode active material layer (112) provided on the current collector (111),
wherein an edge portion of the current collector (111) provided at one end of a winding axis of the electrode assembly comprises a non-coated portion (113) on which no electrode active material layer (112) is provided, and
wherein the non-coated portion (113) of the first electrode (110) is bent one or more times in a direction (P) from a winding center of the electrode assembly toward an outer periphery of the electrode assembly,
wherein the non-coated portion (113) comprises a plurality of segmental pieces, and
**characterised in that**
each of the plurality of segmental pieces is bent one or more times in the direction (P) from the winding center of the electrode assembly toward the outer periphery of the electrode assembly, and
**in that** a segmental piece of the plurality of segmental pieces of the non-coated portion (113) located at least on the outermost periphery of the electrode assembly is bent twice so as to face a lateral surface of the electrode assembly.

2. The electrode assembly of claim 1, wherein at least a part of a segmental piece of the plurality of segmental pieces of the non-coated portion (113) adjoins at least a part of the bent portion of an adjacent segmental piece of the plurality of segmental pieces in a radial direction.

3. The electrode assembly of claim 1, wherein a length from an initially bent portion of the non-coated portion (113) of the first electrode (110) to an end of the non-coated portion (113) of the first electrode (110) is 1 mm or more.

4. The electrode assembly of claim 1, wherein the segmental piece on the outer periphery of the electrode assembly adjoins the lateral surface of the electrode assembly by 1% or more and 30% or less of an overall height of the electrode assembly.

5. The electrode assembly of claim 1, wherein the first electrode (110) is a positive electrode, the second electrode (130) is a negative electrode, and the first electrode (110) is exposed to the outside with respect to an upper surface of the electrode assembly.

6. The electrode assembly of claim 1, wherein the first electrode (110) further comprises an insulation tape (140) provided on a surface opposite to a surface facing the lateral surface of the electrode assembly.

7. A secondary battery comprising:
an electrode assembly according to any one of claims 1 to 6;
a battery can accommodated in the electrode assembly; and
a cap assembly coupled to an upper portion of the battery can.

## Patentansprüche

1. Elektrodenanordnung, hergestellt durch Wickeln eines Stapels aufweisend eine erste Elektrode (110), einen Separator (120) und eine zweite Elektrode (130),
wobei die erste Elektrode (110) aufweist:
einen Stromkollektor (111); und
eine Elektrodenaktivmaterialschicht (112), die auf dem Stromkollektor (111) vorgesehen ist,
wobei ein Kantenabschnitt des Stromkollektors (111), der an einem Ende einer Wickelachse der Elektrodenanordnung vorgesehen ist, einen unbeschichteten Abschnitt (113) aufweist, auf dem keine Elektrodenaktivmaterialschicht (112) vorgesehen ist, und
wobei der unbeschichtete Abschnitt (113) der ersten Elektrode (110) einmal oder mehrmals in einer Richtung (P) von einer Wickelmitte der Elektrodenanordnung zu einem Außenumfang der Elektrodenanordnung gebogen ist,
wobei der unbeschichtete Abschnitt (113) mehrere Segmentstücke aufweist, und
**dadurch gekennzeichnet, dass** jedes der mehreren Segmentstücke einmal oder mehrmals in der Richtung (P) von der Wickelmitte der Elektrodenanordnung zu dem Außenumfang der Elektrodenanordnung gebogen ist, und
dass ein Segmentstück der mehreren Segmentstücke des unbeschichteten Abschnitts (113), das sich zumindest an dem äußersten Umfang der Elektrodenanordnung befindet, zweimal gebogen ist, so dass es einer Seitenfläche der Elektrodenanordnung zugewandt ist.

2. Elektrodenanordnung nach Anspruch 1, wobei zumindest ein Teil eines Segmentstücks der mehreren Segmentstücke des unbeschichteten Abschnitts (113) an zumindest einen Teil des gebogenen Abschnitts eines benachbarten Segmentstücks der mehreren Segmentstücke in einer radialen Richtung angrenzt.

3. Elektrodenanordnung nach Anspruch 1, wobei eine Länge von einem anfänglich gebogenen Abschnitt des unbeschichteten Abschnitts (113) der ersten Elektrode (110) zu einem Ende des unbeschichteten Abschnitts (113) der ersten Elektrode (110) 1 mm oder mehr beträgt.

4. Elektrodenanordnung nach Anspruch 1, wobei das Segmentstück an dem Außenumfang der Elektrodenanordnung an die Seitenfläche der Elektrodenanordnung um 1 % oder mehr und 30 % oder weniger einer Gesamthöhe der Elektrodenanordnung angrenzt.

5. Elektrodenanordnung nach Anspruch 1, wobei die erste Elektrode (110) eine positive Elektrode ist, die zweite Elektrode (130) eine negative Elektrode ist und die erste Elektrode (110) in Bezug auf eine obere Fläche der Elektrodenanordnung nach außen freiliegt.

6. Elektrodenanordnung nach Anspruch 1, wobei die erste Elektrode (110) ferner ein Isolierband (140) aufweist, das auf einer Fläche gegenüber einer Fläche vorgesehen ist, die der Seitenfläche der Elektrodenanordnung zugewandt ist.

7. Sekundärbatterie aufweisend:
eine Elektrodenanordnung nach einem der Ansprüche 1 bis 6;
eine Batteriedose zur Aufnahme der Elektrodenanordnung; und
eine Kappenanordnung, die mit einem oberen Abschnitt der Batteriedose gekoppelt ist.

## Revendications

1. Ensemble d'électrodes réalisé en enroulant un empilement comprenant: une première électrode (110), un séparateur (120), et une deuxième électrode (130),
la première électrode (110) comprenant :
un collecteur de courant (111) ; et
une couche de matière active d'électrode (112) agencée sur le collecteur de courant (111),
une partie marginale du collecteur de courant (111) agencé à un bout d'un axe d'enroulement de l'ensemble d'électrodes comprenant une partie non revêtue (113) sur laquelle aucune couche de matériau actif d'électrode (112) n'est agencée, et
la partie non revêtue (113) de la première électrode (110) étant pliée une ou plusieurs fois dans une direction (P) depuis un centre d'enroulement de l'ensemble électrode vers un pourtour extérieur de l'ensemble d'électrodes,
la partie non revêtue (113) comprenant une pluralité d'éléments segmentaires, et
**caractérisée en ce que**
chacun de la pluralité d'éléments segmentaires est plié une ou plusieurs fois dans la direction (P) du centre d'enroulement de l'ensemble d'électrodes vers le pourtour extérieur de l'ensemble d'électrodes, et
**en ce qu'**un élément segmentaire parmi la pluralité d'éléments segmentaires de la partie non revêtue (113) situés au moins sur le pourtour extérieur de l'ensemble d'électrodes est plié deux fois de façon à faire face à une surface latérale de l'ensemble d'électrodes.

2. Ensemble d'électrodes selon la revendication 1, au moins une partie d'un élément segmentaire de la pluralité d'éléments segmentaires de la section non revêtue (113) jouxtant au moins une partie de la section pliée d'un élément segmentaire adjacent de la pluralité d'éléments segmentaires dans une direction radiale.

3. Ensemble d'électrodes selon la revendication 1, une longueur allant d'une section initialement pliée de la section non revêtue (113) de la première électrode (110) à un bout de la section non revêtue (113) de la première électrode (110) mesurant 1 mm ou davantage.

4. Ensemble d'électrode selon la revendication 1, l'élément segmentaire sur le pourtour extérieur de l'ensemble d'électrodes jouxtant la surface latérale de l'ensemble d'électrodes de 1 % ou davantage et 30 % ou moins de la hauteur totale de l'ensemble d'électrodes.

5. Ensemble d'électrode selon la revendication 1, la première électrode (110) étant une électrode positive, la deuxième électrode (130) étant une électrode négative, et la première électrode (110) étant exposée à l'extérieur relativement à une surface supérieure de l'ensemble d'électrodes.

6. Ensemble d'électrodes selon la revendication 1, la première électrode (110) comprenant en outre un ruban isolant (140) agencé sur une surface située face à une surface faisant face à la surface latérale de l'ensemble d'électrodes.

7. Batterie secondaire comprenant :
un ensemble d'électrodes selon une quelconque des revendications 1 à 6 ;
un boîtier de batterie installé dans l'ensemble d'électrodes ; et
un ensemble de couvercle couplé à une partie supérieure du boîtier de la batterie.
